# EUROPEAN PATENT APPLICATION

(11) **EP 1 548 867 A1**
(43) Date of publication of application: **29.06.2005**
(21) Application number: 03748512.5
(22) Date of filing: 27.08.2003
(51) Int. Cl.: H01M 14/00, H01L 31/04, C09K 3/10, C08L 23/22, C08L 83/05

(54) **SEALANT COMPOSITION FOR DYE-SENSITIZED SOLAR CELL**

(30) Priority: 30.08.2002 JP 2002252494; 02.04.2003 JP 2003098730
(71) Applicant: THREE BOND CO., LTD., Hachioji-shi Tokyo 193-8533 (JP)
(72) Inventor: KAWAI, Toshio, Three Bond Co., Ltd., Hachioji-shi, Tokyo 193-8533 (JP); KISHI, Katsuhiko, Three Bond Co., Ltd., Hachioji-shi, Tokyo 193-8533 (JP)
(74) Representative: Grünecker, Kinkeldey, Stockmair & Schwanhäusser Anwaltssozietät
(86) International application number: PCT/JP2003/010876
(87) International publication number: WO 2004/021503

(57) **Abstract**

The present invention provides a sealant composition for sealing an electrolytic solution of a dye sensitized solar cell, which contains, as main components: (a) an isoprene polymer having at least one (meth)acrylate group; and (b) a diluted monomer, or which containes, as main components, following components (A), (B), (C), and (D): (A) an isobutylene polymer containing in a molecule at least one alkenyl group being capable of a hydrosilylation reaction; (B) organohydrogenpolysiloxane; (C) a hydrosilylating catalyst; and (D) a silane coupling agent.

## Description

### FIELD OF THE INVENTION

The present invention relates to a sealant composition for a dye sensitized solar cell, and, particularly, a cured material of this invention has an excellent electrolytic solution resistance and a high electrolytic solution sealing property and is suitable for the dye sensitized solar cell sealant composition. Further, this invention relates to a method for manufacturing a dye sensitized solar cell using the sealant composition and the dye sensitized solar cell.

### BACKGROUND ART

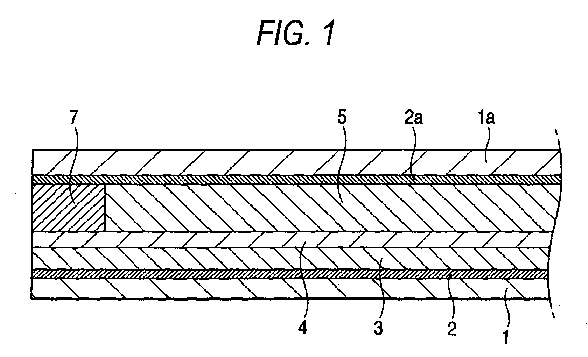

The dye sensitive solar cell reported by Graetzel et al. in 1991 has the advantages of operating with a mechanism different from that of a silicon semiconductor pn junction solar cell, having a conversion efficiency similar to the conventional solar cells, and reduced production cost. The solar cell is called also as a wet type solar cell since an organic solvent-based electrolytic solution is sealed inside the solar cell. Fig. 1 is a schematic sectional view of a representative dye sensitized solar cell.

Referring to Fig. 1, a transparent electroconductive film 2 is formed on one side of a transparent board 1, and titanium oxide particles are uniformly applied on the transparent electroconductive film 2 and then heated to form a porous film 3, followed by adsorption of a dye 4. The above-described board is joined in an opposed fashion to an electroconductive substrate obtained by forming a transparent electroconductive film 2a on a transparent board 1a via a sealant 7, and then an electrolytic solution 5 is injected into a gap defined by the boards and the sealant to obtain the solar cell.

Mechanism that thus-obtained solar cell generates electricity is as follows. Upon irradiation of the transparent board 1 with light, the dye absorbs the light to discharge electrons. The electrons immigrate to the titian oxide film 3 to be conducted to the electrode 2. The electrons immigrate further to the counter electrode 2a to reduce ions in the electrolytic solution 5. The reduced ions are oxidized on the dye 4. This is repeated to generate electricity.

Hence, the dye sensitized solar cell requires an electrolyte for the purpose of giving and receiving the electrons, and the electrolytic solution which is in the form of a liquid is generally used for such purpose. In addition to the electrolytic solution, a gel electrolyte and a solid electrolyte are usable. The gel electrolyte is roughly divided into a physical gel and a chemical gel. The physical gel is in the form of a gel at a room temperature by physical interaction, and examples thereof include polyacrylonitrile and polymethacrylate. The chemical gel is obtained by a chemical bonding through a crosslinking reaction or the like, and examples thereof include acrylic ester-based and methacrylic ester-based gels.

Examples of the solid electrolyte include polypyrrole and CuI. In the case of using the gel electrolyte or the solid electrolyte, an oxide semiconductor film is impregnated with a precursor having a low viscosity, and then a two dimensional or three dimensional crosslinking reaction is caused by means of heating, irradiation with ultraviolet rays, irradiation with electron rays, or the like to achieve gelation or solidification. However, in view of the electric power generation efficiency, it is preferable to use the electrolytic solution.

The electrolytic solution may preferably contain a redox system (charge transfer relay). Examples of the preferred redox system include an iodine/iodine solution, a bromine/bromine solution, a hydroxy solution, a transition metal complex solution transporting unattached electron, and the like. The electrolytic solution is used after being dissolved into an organic solvent such as acetonitrile.

Since the dye sensitized solar cell is required to retain the electrolytic solution, it is necessary to define a gap between the transparent boards. Therefore, a solid packing is sandwiched between the transparent boards as a spacer. The solid packing has a function of a sealing agent for preventing leakage of the electrolytic solution from the cell in addition to the function as the spacer. Conventionally, a solid gasket which is made from a resin and hardly dissolved into the solvent has been used as the spacer. However, since the solid gasket exhibits the sealing property by way of repulsion produced by closely contacting the transparent boards, the repulsion is reduced when the spacer is used for a long term due to the compression and the elapse of time, thereby remarkably reducing reliability of the sealing. Also, since the contact between the transparent boards and the solid gasket is nothing more than the close contact, a leakage from the contact surface tends to occur.

In turn, a curable liquid resin can be used as the sealant. The sealant is used for sealing a gap which is defined by opposing the transparent boards using a spacer or the like. Since the sealant is solidified after adhering to the transparent boards with this method, the sealing property is more reliable than that of the solid packing. As the curable liquid resin, an epoxy resin, a silicone resin, and the like are proposed in JP 2000-30767. However, the electrolytic solution used in the dye sensitized solar cell tends to immerse into the resins, and the resins can be swollen or can be deteriorated to result in a leakage of the electrolytic solution by a long term contact with the electrolytic solution, thereby causing a drawback of failing to satisfy the sealing property.

In the manufacture of the dye sensitized solar cell, the electrolytic solution is injected into a space defined by the solid packing or the sealant made from the curable liquid resin, and then the space is covered with the transparent board on which the transparent electroconductive film is formed, followed by joining by sealing the sides with a resin. In such manufacture method, the problem of leakage of electrolytic solution can be caused when resistance of the sealant to the electrolytic solution is insufficient.

Further, since the mainstream method for curing the curable liquid resin is heating or humidifying, it is necessary to provide a sealing process which can be performed in a reduced time in view of the productivity.

Hence, an object of this invention is to provide a sealant composition having an excellent resistance to the electrolytic solution used in the dye sensitized solar cell, an excellent adhesiveness to the transparent board, and a highly reliable sealing property.

Further, another object of this invention is to provide a method for producing a dye sensitized solar cell using the sealant composition and the dye sensitized solar cell.

### DISCLOSURE OF THE INVENTION

As a result of eager investigation to solve the above problems, it has been found that the above objects are can be achieved by the following dye sensitized solar cell sealant compositions.

More specifically, the present invention provides a sealant composition for sealing an electrolytic solution of a dye sensitized solar cell, which comprises (a) an isoprene polymer having at least one (meth)acrylate group and (b) a diluted monomer as main components, or which comprises the following components (A), (B), (C) and (D) as main components:
(A) an isobutylene-based polymer containing in a molecule at least one alkenyl group being capable of a hydrosilylation reaction;
(B) an organohydrogenpolysiloxane;
(C) a hydrosilylation catalyst; and
(D) a silane coupling agent.

### BRIEF DESCRIPTION OF THE DRAWINGS

Fig. 1 is a sectional view of a dye sensitized solar cell.

Reference numerals in the drawing are as follows.
- 1: transparent board
- 1a: transparent board
- 2: transparent electroconductive film
- 2a: transparent electroconductive film
- 3: porous film
- 4: dye
- 5: electrolytic solution
- 6: (cured material of) sealant composition

### BEST MODE FOR CARRYING OUT THE INVENTION

As described in the foregoing, this invention relates to a dye sensitized solar cell sealant composition

### (hereinafter referred to as a first sealant composition)

comprising, as a primary ingredient, an isoprene polymer having at least one (meth)acrylate group and a dye sensitized solar cell sealant composition (hereinafter referred to as a second sealant composition) comprising components (A), (B), (C) and (D) as main components.

Hereinafter, the first sealant composition of this invention will be described.

The first sealant composition contains as a primary ingredient an isoprene polymer having at least one (meth)acrylate group in a molecule. The (meth)acrylate group has a radical reactivity and polymerizes the ingredient. The (meth)acrylate group may be at an end or an intermediate portion of the molecule. The isoprene polymer of this invention is a polymer obtainable by copolymerizing isoprene or isoprene and a polymerizable compound. In the invention, a isoprene polymer means a polymer containing 90% or more of isoprene. Examples of the polymerizable compound include a straight chain unsaturated hydrocarbon such as ethylene, butane, isobutylene, propylene. A number average molecular weight of the isoprene polymer may be 10,000 to 50,000.

Examples of a method for introducing the (meth)acrylate group into the isoprene polymer include a method of copolymerizing an unsaturated hydrocarbon having (meth)acrylate or the like with isoprene and a method of adding a compound having the (meth)acrylate group to a molecule skeleton of the isoprene polymer by a reaction. As one example of the latter method, the (meth)acrylate group can be introduced by adding maleic anhydride at an end of the isoprene polymerization and then opening a ring of a maleic anhydride-modified portion of the obtained polymer.

The first sealant composition of this invention has at least one (meth)acrylate group in one molecule, but a too large number of the (meth)acrylate groups is not appropriate. The number of (meth)acrylate is preferably from 1 to 4 in isoprene polymer molecular weight, though the number depends on the molecular weight of the isoprene polymer. When the number is 5 or more, electrolytic solution performance in the dye sensitized solar cell is deteriorated. This means that the average number of the (meth)acrylate groups contained in the isoprene polymer molecule is desirably from 1 to 4 and not that the existence of even one isoprene polymer molecule having 5 or more (meth)acrylate groups in one molecule is inappropriate.

The first sealant composition of this invention can be changed into a composition which is cured by a desired method by adding to the first sealant composition a compound generating radicals by way of an external factor. It is possible to polymerize the (meth)acrylate group by adding organic peroxide in the case of curing by heating or by adding a photoinitiator in the case of curing by light irradiation. Among the above, the method of curing by light irradiation is the most advantageous in view of the workability.

Photoinitiators in general use can be used as the photoinitiator to be used for the first sealant composition of this invention. Examples thereof include acetophenone, benzophenone, thioxantone, benzoinether, diethoxyacetophenone, 1-phenyl-1-hydroxy-2-methylpropane-1-on, 1-hydroxycyclohexylphenylketone, 2-methyl-1(4-methylthiophenyl)-2-morphorinopropane-1-on, comphorquinone, benzyl, 2-benzyl-2-dimethylamino-1-(4-morphorino)-butane-1, benzylmethylketal, acylphosphineoxide, glyoxyesters, and the like. An mount of the photoinitiator to be added is from 0.5 to 10 parts by weight, preferably from 1 to 7 parts by weight, to a total amount of the isoprene polymer and a diluted monomer which is described later in this specification.

As the diluted monomer to be used for the first composition of this invention, a saturated hydrocarbon-based (meth)acrylic ester compound having at least one (meth)acrylate group in a molecule is preferably used. More specifically, isoboronyl(meth)acrylate, butyl(meth)acrylate, lauryl(meth)acrylate, isonolyl(meth)acrylate, and the like is preferably used. The above diluted monomers not only reduce a viscosity of a resin but also contribute to an improvement in resin strength. An amount of the diluted monomer to be added is preferably from 20 to 200 parts by weight to 100 parts by weight of the isoprene polymer.

Also, it is advantageous to add an inorganic filler as required in addition to the above described ingredients. Various fillers such as calcium carbonate, talc, silica, and carbon black can be used as the filler. However, in the case of curing the first sealant composition of this invention by the irradiation with light, it is necessary to consider possibility of a reduction in curability because a filler excessively high in hiding powercan disturb the curability when it is used in a large amount. Further, it is possible to add a spacer for retaining the gap, an antioxidant, a pigment, a surfactant, and the like to the first sealant composition of this invention as required.

It is possible to add a silane coupling agent to the first sealant composition of this invention for the purpose of improving adhesiveness. More specifically, it is preferable to use a silane coupling agent having at least one functional group selected from an epoxy group, a methacryl group, an acryl group, a vinyl group and a carbamate group, and a silicon atom-bound alcohol group. The functional having the epoxy group, the methacryl group, and the acryl group in the molecule may preferably be used in view of the curability and the adhesiveness. More specifically, examples of an organic silicon compound having an epoxy functional group and a silicon atom-bound alkoxy group include 3-glycidoxypropyltrimethoxysilane, 3-glycidoxypropyltriethoxysilane, 2-(3,4-epoxycyclohexyl)ethyltrimethoxysilane, and -(3,4-epoxycyclohexyl)ethyltriethoxysilane. Examples of an organic silicon compound having a methacryl group or an acryl group and a silicon atom-bound alkoxy group include, 3-methacryloxypropyltrimethoxysilane, 3-methacryloxypropyltriethoxysilane, 3-acryloxypropyltrimethoxysilane, 3-acryloxypropyltriethoxysilane, methacryloxymethyltrimethoxysilane, methacryloxymethyltriethoxysilane, acryloxymethyltrimethoxysilane, and acryloxymethyltriethoxysilane.

Hereinafter, the second sealant composition of this invention will be described.

The component (A) used for the second sealant composition of this invention is polyisobutylene having in a molecule at least one alkenyl group capable of hydrosilylation reaction. In the invention, a polyisobutylene means a polymer containing at least 50 mol%, preferably 80 mol% of isobutylene units with respect to repeating units thereof. A number average molecular weight of the polyisobutylene may preferably be from 100 to 20,000. Monomer units other than isobutylene are olefin having 4 to 12 carbon atoms, vinylether, an aromatic vinyl compound, vinylsilanes, allylsilanes, and the like. Specific examples of the copolymer components include 1-butene, 2-butene, 2-methtl-1butene, 3-methyl-1-butene, pentene, 4-methyl-1-pentene, hexene, vinylcyclohexane, methylvinylether, ethylvinylether, isobutylvinylether, styrene, α-methylstyrene, dimethylstyrene, p-t-butoxystyrene, p-hexenyloxystyrene, p-allyloxystyrene, p-hydroxystyrene, β-pinene, indene, vinyldimethylmethoxysilane, vinyltrimethoxysilane, divinyldimethoxysilane, vinyltrimethoxysilane, divinyldimethylsilane, 1,3-divinyl-1,1,3,3-tetramethyldisiloxane, trivinylmethylsilane, tetravinylsilane, allyldimethylmethoxysilane, diallyldimethoxysilane, diallyldimethylsilane, γ-methacryloyloxypropyltrimethoxysilane, γ-methacryloyloxypropylmethyldimethoxysilane, and the like.

The alkenyl group capable of hydrosilylation reaction is not particularly limited so far as it contains a carbon-carbon double bond active in the hydrosilylation reaction. Examples of the alkenyl group include an aliphatic unsaturated hydrocarbon group such as a vinyl group, an allyl group, a methylvinyl group, a propinyl group, a butenyl group, a pentenyl group, and a hexenyl group and a cyclic unsaturated hydrocarbon group such as a cyclopropinyl group, a cyclobutenyl group, a cyclopentenyl group, and a cyclo hexenylgroup. In this invention, the component (A) may preferably have 2 or more alkenyl groups in one molecule. Further, the component (A) in this invention may preferably have the alkenyl group capable of the hydrosilylation reaction introduced into a polymer end. The component (A) having the alkenyl group at the polymer end is preferred since a cured material formed ultimately from such component (A) is increased in effective amount lattice chains, and such component (A) makes it easy to obtain a cured material having great strength and elongation.

As the isobutylene polymer of the component (A), a compound represented by the following general formula may preferably be used.

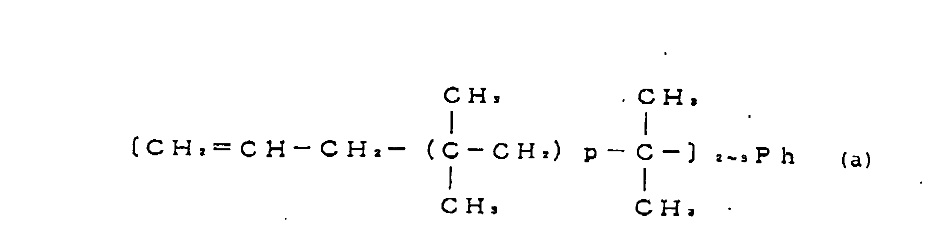

### (wherein p represents an integer of 10 to 300, and Ph represents a phenyl group.)

As the curing agent which is the component (B) of the second sealant composition of this invention, organohydrogenpolysiloxane may be used. As used herein, the organohydrogenpolysiloxane means a polysiloxane having a hydrocarbon group or a hydrogen atom on a Si atom, and specific examples of a preferred structure thereof are a chain structure and a ring structure as represented by the following formulas (b1) to (b5). 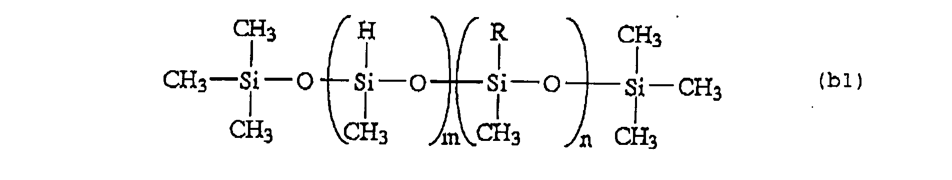 (wherein m is an integer of 2 or more; n is an integer of 0 or more; a sum of m and n is 4 to 50; R is a hydrocarbon group having 2 to 20 carbon atoms, such as a methyl group and a phenyl group.) 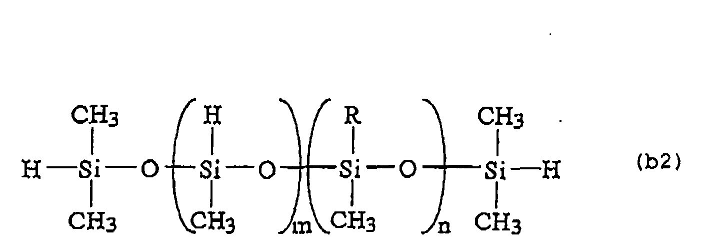 (wherein m is an integer of 2 or more; n is an integer of 0 or more; a sum of m and n is 4 to 50; and R is a hydrocarbon group having 2 to 20 carbon atoms, such as a methyl group and a phenyl group.) 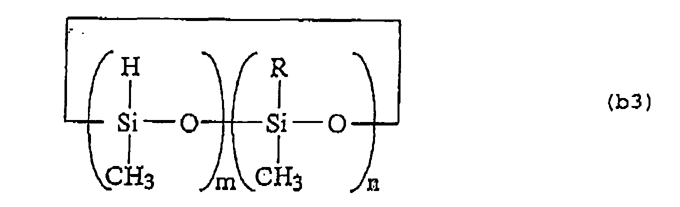 (wherein m is an integer of 2 to 20; n is an integer of 0 to 18; a sum of m and n is 2 to 20; and R is a hydrocarbon group having 2 to 20 carbon atoms, such as a methyl group and a phenyl group.) 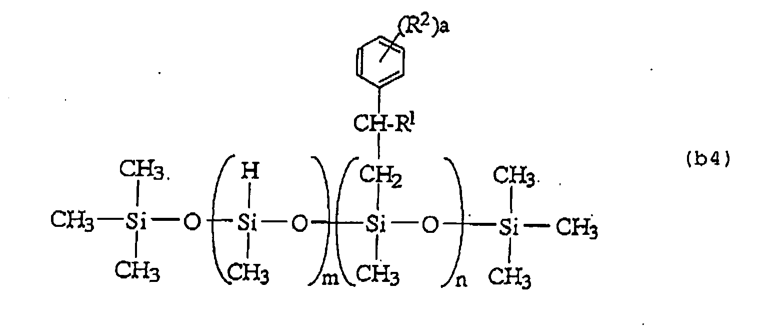 (wherein m is an integer of 2 to 20; n is an integer of 0 to 18; a sum of m and n is 2 to 20 or less; and R is a hydrocarbon group having 2 to 20 carbon atoms, such as a methyl group and a phenyl group.) 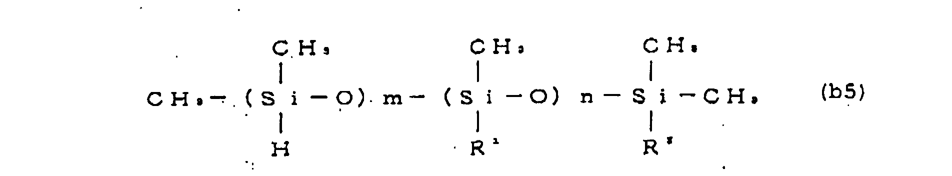 (wherein m is an integer of 2 to 30; n is an integer of 0 to 30; and each of R¹ and R² is an alkyl group having about 1 to 20 carbon atoms.)

In view of less possibility of impairing compatibility of the curing agent with the organic polymers such as the component (A), those of the formulas (b4) and (b5) are particularly preferred among the hydrosilyl group-containing curing agents.

It is preferable that one molecule in the component (B) contains at least 2 hydrosilyl groups, more preferably 2 to 40 hydrosilyl groups. In the case of curing the second sealant composition of this invention by the hydrosilylation reaction, a stability of the curing agent which is the component (B) is deteriorated so that a large amount of hydrosilyl groups remains in the cured material after the curing to cause voids and cracks when the number of hydrosilyl groups is larger than 40. A content of the component (B) is preferably an amount such that a molar ratio of Si-H of the component (B) to the alkenyl group of the component (A) is in the range of 1 : 0.8 to 5.

The hydrosilylation catalyst which is the component (C) in the second sealant composition of this invention is not particularly limited, and an arbitrarily selected hydrosilylation catalyst may be used. Specific examples of the hydrosilylation catalyst include a carrier supporting solid platinum, such as chloroplatinic acid, a monomer of platinum, alumina, silica, and carbon black; a platinum-vinylsiloxane complex {for example, Ptₙ(ViMe₂SiOS₂Me₂Vi)n, Pt [MeViSiO)₄]m}; a platinum-phosphine complex {for example Pt(PPh₃)₄, Pt(PBu₃)₄}; platinum-phosphite complex {for example, Pt[P(OPh)₃]₄, Pt(P(OBu)₃]₄} (wherein Me represents a methyl group; Bu represents a butyl group; Vi represents a vinyl group; Ph represents a phenyl group; and each of n and m represents an integer).

Examples of the catalyst other than the platinum compound includes RhCl(PPh₃)₃, RhCl₃, Rh/Al₂O₃, RuCl₃, IrCl₃, FeCl₃, AlCl₃, PdCl₂·2H₂O, NiCl₂, TiCl₄, and the like. The catalysts may be used alone or in combination of 2 or more. In view of catalyst activity, the chloroplatinic acid, the platinum-olefin complex, the platinum-vinylsiloxane complex, and the like may preferably be used.

An amount of the catalyst is not particularly limited, and it is preferable that a ratio of the catalyst to 1 mol of the alkenyl group in the component (A) is in the range of 10⁻¹ to 10⁻⁸ mol, more preferably in the range of 10⁻² to 10⁻⁶ mol. Also, it is not recommended to use 10⁻¹ mol or more of the hydrosilylation catalyst since the hydrosilylation catalyst is generally expensive and can generate hydrogen gas to foam the cured material.

In this invention, since the sealant composition is cured by way of an addition reaction of the Si-H group with the alkenyl group using a precious metal catalyst, a curing speed is very rapid to significantly expedite the line production.

As the silane coupling agent which is the component (D) in the second sealant composition of this invention, a silane coupling agent having in a molecule at least one functional group selected from a group consisting of an epoxy group, a methacryl group, an acryl group, a vinyl group and a carbamate group, and a silicon atom-bound alcohol group. The functional group may preferably contain in a molecule the epoxy group, the methacryl group and the acryl group in view of curability and adhesiveness. More specifically, examples of an organic silicon compound having an epoxy functional group and a silicon atom-bound alkoxy group include 3-glycidoxypropyltrimethoxysilane, 3-glycidoxypropyltriethoxysilane, 2-(3,4-epoxycyclohexyl)ethyltrimethoxysilane, and 2-(3,4-epoxycyclohexyl)ethyltriethoxysilane. Examples of an organic silicon compound having the methacryl group or the acryl group and the silicon atom-bound alkoxy group include 3-methacryloxypropyltrimethoxysilane, 3-methacryloxypropyltriethoxysilane, 3-acryloxypropyltrimethoxysilane, 3-acryloxypropyltriethoxysilane, methacryloxymethyltrimethoxysilane, methacryloxymethyltriethoxysilane, acryloxymethyltrimethoxysilane, and acryloxymethyltriethoxysilane. An amount of the (D) component to be added is preferably from 1 to 20 parts by weight to 100 parts by weight of the component (A).

Also, it is possible to add various plasticizers and various inorganic fillers to the second sealant composition of this invention. The plasticizer is added to improve fluidity of the composition. It is possible to use general plasticizers, but the one having good compatibility with the unsaturated hydrocarbon-based polymer used in this invention may preferably be used. Specific examples of the plasticizer include hydrocarbon-based compounds such as polybutene, hydrogenated polybutene, an α-methylstyrene oligomer, liquid polybutadiene, hydrogenated liquid polybutadiene, paraffin oil, naphthene oil, and atactic polypropylene.

As the inorganic filler, it is possible to use various fillers such as calcium carbonate, talc, silica, and carbon black. Since the curable composition of this invention utilizes the curing by the hydrosilylation reaction, it is necessary to consider possibility of disturbance that the filler may cause to the hydrosilylation reaction, such as the possibility of a side reaction which is caused during the curing reaction when too much water is contained in the composition. Further, it is possible to add other fillers, antioxidants, ultraviolet rays absorbents, pigments, surfactants, and the like to the sealant composition of this invention when so required.

In the case of using the second sealant composition of this invention for a dye sensitized solar cell, a primer may preferably be used. Since a joining surface which is to be joined by the use of the sealing agent is a dye layer or a transparent electroconductive film in the case of the dye sensitized solar cell, adhesiveness is reduced as compared with the case of joining a glass. Accordingly, it is preferred to use the primer to exploit the sealing property. Examples of the primer include ethylsilicate, isopropoxy titanate, titanium tetrabutoxide, and the like. The primer is dissolved into an organic solvent or the like and then applied to the joining body to be dried.

### EXAMPLES

### Example 1

The isoprene polymer having the (meth)acrylate group used in this Example has the structure shown below. The number of repetitions in the molecular structure in the structure shown below is an average value of the overall molecules.

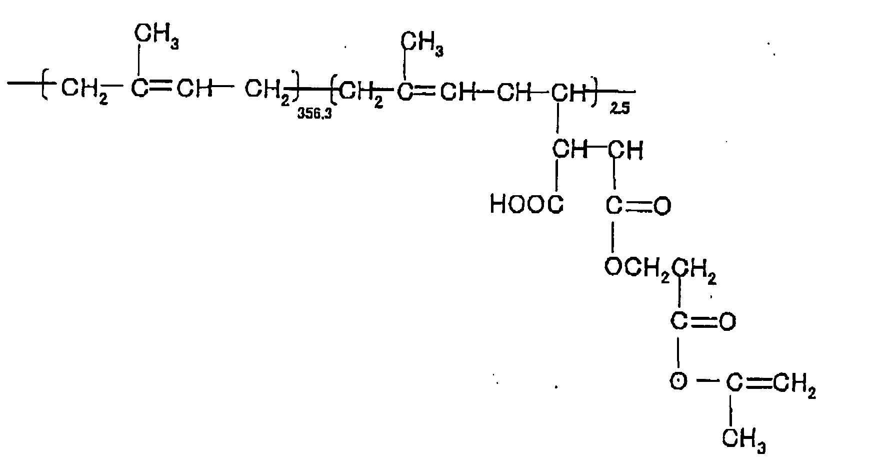

A sealant composition was prepared by adding, to 50 parts by weight of the isoprene polymer, 50 parts by weight of isoboronyl acrylate as a diluting agent, 1 part by weight of MARK AO-50 (manufactured by Adeka Argus Chemical Co., Ltd.) as an antioxidant, 30 parts by weight of white carbon (manufactured by Nippon Silica Industrial Co., Ltd.), 5 parts by weight of 1-hydroxycyclohexylphenylketone as an photoinitiator to the main component, 1 part by weight of glass beads having a particle size of 25 microns as a gapping agent (the amount was measured by using a scale), and then defoaming the mixture by stirring.

Next, a solar cell was produced by using the sealant composition as follows.
1. Titanium oxide fine particles were obtained by heating 1 litter of a 80 g/l titanyl sulfate solution to 85°C and maintaining the titanyl sulfate solution at the temperature to hydrolyze titanyl sulfate. The thus-obtained titanium oxide fine particles were filtrated and washed, followed by dispersion into water to obtain a 200 g/l suspension based on the amount of TiO₂. Then, a nitric acid solution was added to the suspension to adjust pH of the suspension to 1.0, and the suspension was placed into an autoclave to be subjected to hydrothermal processing at 180°C for 13 hours under a saturated steam pressure. Next, 40 wt% of polyethylene glycol (number average molecular weight: 20,000) based on the amount of TiO₂ in the suspension was added to the suspension and then heated to 60°C. Then, the suspension was applied on a transparent electroconductive glass plate coated with fluorine-doped tin oxide and naturally dried, followed by baking at 600°C for 30 minutes to form titanium oxide in the form of a porous film on the support.
2. A spectral sensitization dye represented by cis-(SCN⁻) 2-bis(2,2'-bipyridyl-4,4'-dicarboxylate)ruthenium (II) is dissolved into an ethanol liquid. A concentration of the spectral sensitization dye was 3 × 10⁻⁴ mol/l. Then, the support on which the titanium oxide film was formed was placed into this ethanol liquid, followed by heating to the boiling point of the ethanol liquid to reflux for 15 minutes.
3. The sealant composition was applied circularly on an outer periphery of the object obtained in 2. A part of ring beads was removed to form an inlet for filling an electrolytic solution. Another transparent electroconductive glass plate which is coated with fluorine-doped tin oxide and carries platinum was prepared, and the transparent electroconductive glass plate was joined as a counter electrode to the stack material on which the sealant composition was applied. The joined object was irradiated with ultraviolet rays at irradiation energy of 3J/cm² to cure the sealant composition. An electrolyte was inserted between two electrodes via the inlet, and then the inlet was sealed with an ambient temperature curable resin. After that, a lead wire was provided to the object to obtain a dye sensitized solar cell. The electrolyte was obtained by dissolving tetrapropylammoniumiodide and iodine to an acetonitrile/ethylene carbonate mixture solvent having a volumetric ratio of 1 : 4 so as to achieve a concentration of tetrapropylammoniumiodide of 0.46 mol/l and a concentration of iodide of 0.06 mol/l.

The obtained solar cell was heated in a heating furnace at 100°C for 1 hour, and then changes in weight at a room temperature were observed as an endurance test. As a result, the weight did not change and the electrolytic solution did not leak.

### Example 2

A sealant composition prepared by the following process was used.
Component (A): 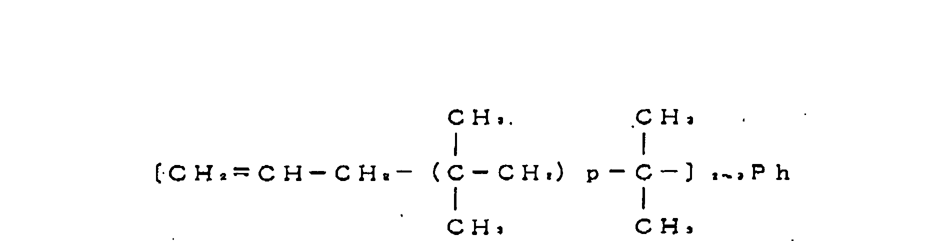 (p represents an integer of 180, and Ph represents a phenyl group)
Component (B): 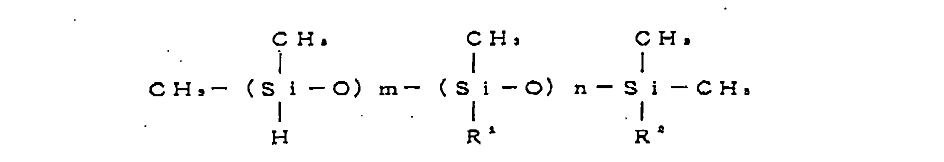 (m: an integer of 3 to 10; n: an integer of 3 to 10; and each of R¹ and R² is an alkyl group having about 1 to 20 carbon atoms)
Component (C): bis(1,3-divinyl-1,1,3,3-tetramethyldisiloxane) platinum catalyst (8.3 × 10⁻⁵ mmol/µl, xylene solution)
Component (D): 3-glycidoxypropyltrimethoxysilane (manufactured by Nihonunica Corporation, trade name: A-187)

Amounts of the component (A) and the component (B) were measured in such a manner that a ratio of an alkenyl mass of the component (A) and a Si-H mass of the component (B) became 1.0 to 2.0. An amount of process oil (manufactured by Idemitsu Kosan Co., Ltd.; trade name: PS-32) was 50 parts by weight to 100 parts by weight of the component (A). An amount of an antioxidant (manufactured by Adeka Argus Chemical Co., Ltd.: trade name: MARK AO-50) was 3 parts by weight to 100 parts by weight of the component (A). An amount of white carbon (manufactured by Nippon Silica Industrial Co., Ltd.) was 50 parts by weight to 100 parts by weight of the component (A). The above ingredients were mixed and stirred for defoaming. Then, 4.3 parts by weight of 3-glycidoxypropyltrimethoxysilane was added as the component (D) to 100 parts by weight of the component (A). Then, dimethyl maleate was added as a preservation stability improver in an amount of 30 mol equivalent to platinum to the above mixture, and then bis(1,3-divinyl-1,1,3,3-tetramethyldisxiloxane) platinum catalyst (8.3 × 10⁻⁵ mmol/µl, xylene solution) was added to the mixture in such an amount that an amount of platinum became 5 × 10⁻⁴ equivalent weight to the number of moles of the alkenyl group of the component (A). The mixture was mixed to be uniform to obtain the sealant composition.

Next, a solar cell was produced by using the sealant composition as follows.
1. Titanium oxide fine particles were obtained by heating 1 litter of a 80 g/l titanyl sulfate solution to 85°C and maintaining the titanyl sulfate solution at the temperature to hydrolyze titanyl sulfate. The thus-obtained titanium oxide fine particles were filtrated and washed, followed by dispersion into water to obtain a 200 g/l suspension based on the TiO₂ standard. Then, a nitric acid solution was added to the suspension to adjust pH of the suspension to 1.0, and the suspension was placed into an autoclave to be subjected to hydrothermal processing at 180°C for 13 hours under a saturated steam pressure. Next, polyethylene glycol (number average molecular weight: 20,000) was added to the suspension in an amount of 40 wt% to the TiO₂ standard in the suspension and then heated to 60°C. Then, the suspension was applied on a transparent electroconductive glass plate coated with fluorine-doped tin oxide and naturally dried, followed by baking at 600°C for 30 minutes to form titanium oxide in the form of a porous film on the support.
2. A spectral sensitization dye represented by cis-(SCN⁻) 2-bis(2,2'-bipyridyl-4,4'-dicarboxylate)ruthenium (II) is dissolved into an ethanol liquid. A concentration of the spectral sensitization dye was 3 × 10⁻⁴ mol/l. Then, the support on which the titanium oxide film was formed was placed into this ethanol liquid, followed by heating to the boiling point of the ethanol liquid to reflux for 15 minutes.
3. A 10% titanium tetrabutoxide solution was applied on an outer periphery of the object obtained in 2 to be dried, and then the sealant composition was applied circularly on the outer periphery of the object obtained in 2. A part of ring beads was removed to form an inlet for filling an electrolytic solution. Another transparent electroconductive glass plate which was coated with fluorine-doped tin oxide and carries platinum was prepared, and the primer was applied on the outer periphery of the transparent electroconductive glass plate. The transparent electroconductive glass plate was joined as a counter electrode to the stack material on which the sealant composition was applied. The joined object was heated at 120°C for 40 minutes to cure the sealant composition. An electrolyte was inserted between two electrodes via the inlet, and then the inlet was sealed with an ambient temperature curable resin. After that, a lead wire was provided to the object to obtain a dye sensitized solar cell. The electrolyte was obtained by dissolving tetrapropylammoniumiodide and iodine to an acetonitrile/ethylene carbonate mixture solvent having a volumetric ratio of 1 : 4 so as to achieve a concentration of tetrapropylammoniumiodide of 0.46 mol/l and a concentration of iodide of 0.06 mol/l.

The obtained solar cell was heated in a heating furnace at 100°C for 1 hour, and then changes in weight at a room temperature were observed as an endurance test. As a result, the weight did not change and the electrolytic solution did not leak.

### Comparative Example

Solar cells were produced as comparative examples in the same manner expect for using conventional sealing agents. A Solar cell was produced by using epoxy modified silicone (trade name: Three Bond 3950; manufactured by Three Bond Co., Ltd.) and under curing conditions of 25°C × 55% RH for 7 days. A solar cell was produced by using an ultraviolet ray curable acryl resin (trade name: Three Bond 3051; manufactured by Three Bond Co., Ltd.) and with irradiation with ultraviolet rays. The cells were heated in a heating furnace at 100°C for 1 hour, and then changes in weight were measured. The former was reduced in weight by 0.2%, and the latter was reduced in weight by 0.15%, thereby revealing a leakage of the electrolytic solution.

While the present invention has been described in detail and with reference to specific embodiments thereof, it will be apparent to one skilled in the art that various changes and modifications can be made therein without departing the spirit and scope thereof.

The present application is based on Japanese Patent Application Nos. 2002-252494 filed on August 30, 2002 and 2003-098730 filed on April 2, 2003, and the contents thereof are incorporated herein by reference.

### INDUSTRIAL APPLICABILITY

The dye sensitized solar cell sealant composition of this invention has a high resistance to an electrolytic solution of a dye sensitized solar cell and is capable of sealing without a leakage of the electrolytic solution. As a result, the sealant enables a long-term use of the solar cell without reducing an efficiency of the solar cell.

## Claims

1. A sealant composition for sealing an electrolytic solution of a dye sensitized solar cell,
which comprises, as main components:
(a) an isoprene polymer having at least one (meth)acrylate group; and
(b) a diluted monomer, or
which comprises, as main components, following components (A), (B), (C) and (D):
(A) an isobutylene-based polymer containing in a molecule at least one alkenyl group being capable of a hydrosilylation reaction;
(B) an organohydrogenpolysiloxane;
(C) a hydrosilylating catalyst; and
(D) a silane coupling agent.

2. The sealant composition for sealing an electrolytic solution of a dye sensitized solar cell according to claim 1,
which comprises, as main components, (a) the isoprene polymer having at least one (meth)acrylate group and (b) the diluted monomer.

3. The sealant composition for sealing an electrolytic solution of a dye sensitized solar cell according to claim 1,
which comprises, as main components, the components (A), (B), (C) and (D).

4. The sealant composition for sealing an electrolytic solution of a dye sensitized solar cell according to claim 3,
wherein the component (A) is an isobutylene-based polymer represented by the following general formula (a): 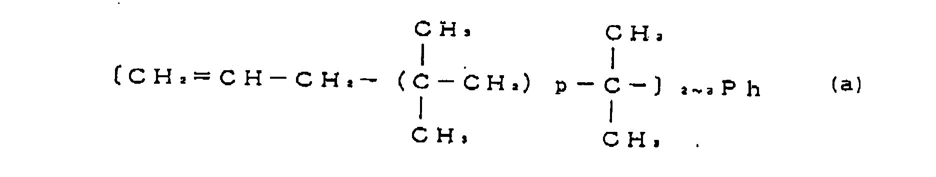 (wherein p represents an integer of 10 to 300, and Ph represents a phenyl group).

5. The sealant composition for sealing an electrolytic solution of a dye sensitized solar cell according to claims 3 or 4,
wherein the component (B) is a compound represented by the general formula (b5) shown below, which contains at least two hydrosilyl groups in a molecule: 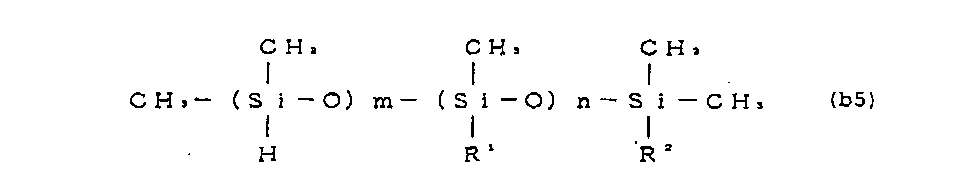 (wherein m represents an integer of 2 to 30; n represents an integer of 0 to 30; and each of R¹ and R² represents an alkyl group having about 1 to 20 carbon atoms).

6. A process for producing a dye sensitized solar cell, which comprises:
joining a first laminate comprising at least:
a transparent electroconductive film,
a porous film; and
a dye layer, which provided on a transparent board,
to a second laminate comprising at least a transparent electroconductive film provided on a transparent board by using a sealant composition; and
filling an electrolytic solution between the laminates,
wherein the sealant composition is a composition according to claim 1.

7. A dye sensitized solar cell produced by the production process according to claim 6.
